## Europäisches Patentamt

## European Patent Office

## Office européen des brevets

(19)

(11) **EP 0 816 226 B1**

(12) **FASCICULE DE BREVET EUROPEEN**

(45) Date de publication et mention
de la délivrance du brevet:
**09.01.2002 Bulletin 2002/02**

(51) Int Cl.⁷: **B64D 43/00**, G07C 3/00

(21) Numéro de dépôt: **97401246.0**

(22) Date de dépôt: **04.06.1997**

(54) **Indicateur de pilotage pour aéronef**

Anzeigesystem für Flugzeuge

Aircraft cockpitindicator

(84) Etats contractants désignés:
**DE GB IT**

(30) Priorité: **07.06.1996 FR 9607040**

(43) Date de publication de la demande:
**07.01.1998 Bulletin 1998/02**

(73) Titulaire: **EUROCOPTER**
**13725 Marignane Cédex (FR)**

(72) Inventeur: **Germanetti, Serge Alexandre Marc**
**13005 Marseille (FR)**

(74) Mandataire: **Bonnetat, Christian**
**CABINET BONNETAT 29, rue de St. Pétersbourg**
**75008 Paris (FR)**

(56) Documents cités:
**EP-A- 0 275 192**          **EP-A- 0 286 120**
**FR-A- 1 416 344**          **FR-A- 2 710 026**

EP 0 816 226 B1

**Description**

La présente invention concerne un indicateur de pilotage pour aéronef.

Un tel indicateur est plus spécifiquement adapté à un aéronef à voilure tournante, notamment un hélicoptère.

Le pilotage d'un hélicoptère s'effectue grâce à la surveillance de nombreux instruments sur le tableau de bord, instruments qui sont pour la plupart représentatifs du fonctionnement de l'ensemble moteur et de l'aéronef. Pour des raisons physiques, il existe de nombreuses limitations que le pilote doit prendre en compte à chaque instant du vol. Ces différentes limitations dépendent généralement de la phase de vol et des conditions extérieures.

La plupart des hélicoptères construits actuellement sont équipés d'un ou deux turbomoteurs, généralement à turbine libre. La puissance est alors prélevée sur un étage basse pression de la turbine, lequel étage est mécaniquement indépendant de l'ensemble du compresseur et de l'étage haute pression de la turbine. Un turbomoteur tournant entre 30000 et 50000 tours par minute, une boîte de réduction spéciale est nécessaire pour la liaison au(x) rotor(s) : la boîte de transmission principale.

Les limitations thermiques tant du moteur que de la boîte de transmission principale permettent de définir trois régimes d'utilisation du moteur :

- le régime de décollage ne correspondant pas à une limite du moteur, mais à la puissance maximale que la boîte de transmission peut absorber sans subir une quelconque détérioration, compte tenu de ses possibilités intrinsèques de refroidissement : on parle alors de puissance maximale au décollage (PMD),
- le régime maximal continu pendant lequel, à aucun moment, ne sont dépassées les possibilités de la boîte de transmission, ni celles résultant de l'échauffement maximal admissible devant les aubages à haute pression du premier étage de la turbine : c'est la puissance maximale en continu (PMC),
- le régime maximal en transitoire, défini par la butée de régulation : on parle alors de puissance maximale en transitoire (PMT).

Le motoriste établit, par calculs ou par essais, les courbes de puissance disponible d'un turbomoteur en fonction de l'altitude et de la température, et cela pour chacun des trois régimes définis ci-dessus.

Les limitations indiquées sont généralement surveillées par l'intermédiaire de trois paramètres : le régime du générateur de gaz (Ng), le couple moteur (Cm) et la température d'éjection des gaz à l'entrée de turbine libre (T4).

Jusqu'à présent, ces trois paramètres sont affichés sur trois écrans (cadrans) différents pouvant être situés en différents endroits du tableau de bord de l'appareil. Il en résulte, pour le pilote, la difficulté, d'une part, de visualiser l'ensemble de ces informations et, d'autre part, d'en retirer l'information déterminante pour le pilotage.

On connaît de plus, par le brevet FR-1 416 344, un indicateur de pilotage pour aéronef, destiné à fournir la marge de puissance disponible sur au moins un moteur de l'aéronef en fonction des conditions de vol, remarquable, selon l'invention, en ce qu'il comprend :

- des capteurs aptes à délivrer des informations relatives à différents paramètres de surveillance du moteur,
- des moyens de traitement des informations issues desdits capteurs, et
- des moyens d'affichage présentant, sur un écran de visualisation, les informations traitées relatives au paramètre, parmi lesdits paramètres de surveillance du moteur, dont la valeur actuelle est la plus proche de la valeur limite pour ledit paramètre.

Toutefois, les mesures obtenues par un tel indicateur demeurent absolues.

La présente invention a pour but d'éviter cet inconvénient.

A cet effet, lesdites valeurs limites pour chaque paramètre sont établies en tenant compte, en temps réel, de la pression (P0) et de la température (T0) ambiantes.

L'indicateur de l'invention identifie donc, en valeurs relatives, parmi les paramètres essentiels de surveillance du moteur, celui qui est le plus proche de sa limite. Les informations relatives aux limitations à respecter sont ainsi regroupées sur un affichage unique, en permettant, d'une part, d'effectuer une synthèse et de présenter uniquement le résultat de cette synthèse afin de simplifier la tâche du pilote et, d'autre part, de gagner de la place sur la planche de bord.

Plus particulièrement, dans le cas où l'indicateur de pilotage selon l'invention est destiné à un aéronef à voilure tournante, notamment un hélicoptère, comportant au moins un turbomoteur d'entraînement d'au moins un rotor, lesdits paramètres de surveillance du moteur sont :

- le régime du générateur de gaz (Ng),
- la température d'éjection des gaz à l'entrée de turbine libre (T4), et
- le couple moteur (Cm).

Avantageusement, dans lesdits moyens de traitement, les valeurs du régime du générateur de gaz (Ng) et de la température des gaz (T4) sont ramenées à une échelle comparable au couple moteur, après avoir été comparées à leurs limites respectives.

De préférence, lesdites limites sont établies en tenant compte de tout prélèvement de puissance au niveau du moteur de l'aéronef (électrique ou prélèvement de gaz dit P2).

En particulier, lesdites valeurs du régime du générateur de gaz (Ng), de la température des gaz (T4) et du couple moteur (Cm) peuvent être exprimées en pourcentage de leurs limites respectives.

En fonctionnement "normal" de l'aéronef, sur ledit écran de visualisation, un seul cadran est affiché montrant le paramètre dont la valeur actuelle est la plus proche de la valeur limite pour ledit paramètre.

Toutefois, sur ledit écran de visualisation, peuvent être affichés autant de cadrans que de paramètres de surveillance du moteur, le paramètre dont la valeur actuelle est la plus proche de la valeur limite étant mis en évidence, par exemple en soulignant sa valeur numérique exprimée en chiffres, et cela dans certaines conditions de fonctionnement de l'aéronef explicitées par la suite.

Les figures du dessin annexé feront bien comprendre comment l'invention peut être réalisée. Sur ces figures, des références identiques désignent des éléments semblables.

La figure 1 est un schéma synoptique de l'indicateur de pilotage selon l'invention.

La figure 2 montre l'écran de visualisation, associé à l'indicateur selon l'invention, dans le mode d'affichage à une information (cadran unique).

La figure 3 montre le même écran de visualisation que sur la figure 2 dans le mode d'affichage à trois informations.

La figure 4 est un organigramme montrant l'organisation générale de la fonction de présentation des informations de contrôle de la puissance du moteur.

La figure 5 est une courbe illustrant différentes phases de vol.

L'indicateur de pilotage pour aéronef selon l'invention est destiné à fournir (afficher) la marge de puissance disponible sur au moins un moteur de l'aéronef en fonction des conditions de vol. Bien qu'il soit utilisable pour d'autres types d'aéronef, la description suivante se rapportera à l'exemple spécifique d'un aéronef à voilure tournante (hélicoptère) comportant au moins un turbomoteur d'entraînement d'au moins un rotor, avec les paramètres particuliers de surveillance du moteur liés à cet exemple (un moteur et un rotor).

Dans le cas décrit ici, on prendra en compte les paramètres suivants :

- Ng vitesse de rotation ou régime du générateur de gaz,
- T4 température d'éjection des gaz à l'entrée de turbine libre,
- Cm couple moteur.

Il est bien entendu, par ailleurs, que, dans le cas d'un hélicoptère ayant plusieurs moteurs, un tel indicateur peut être utilisé pour chacun desdits moteurs.

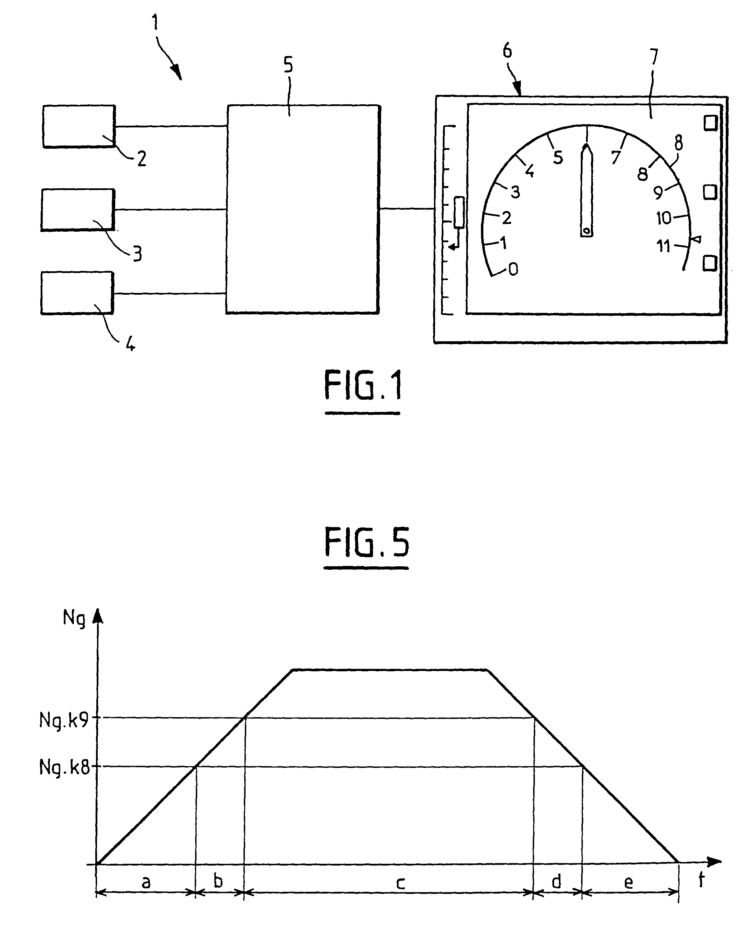

Comme on le voit sur la figure 1, l'indicateur 1 selon l'invention comprend différents capteurs 2, 3, 4 relatifs aux différents paramètres cités ci-dessus, respectivement, et aptes à délivrer les informations correspondant à ces différents paramètres à un calculateur 5 traitant lesdites informations. Des moyens d'affichage 6 présentent, sur un écran de visualisation 7, les informations traitées relatives au paramètre, dit "paramètre limitant", parmi lesdits paramètres de surveillance du moteur, dont la valeur actuelle est la plus proche de la valeur limite pour ledit paramètre. Pour cette raison, on désignera également ci-après l'indicateur 1 par l'expression "instrument de première limitation", en abrégé "IPL".

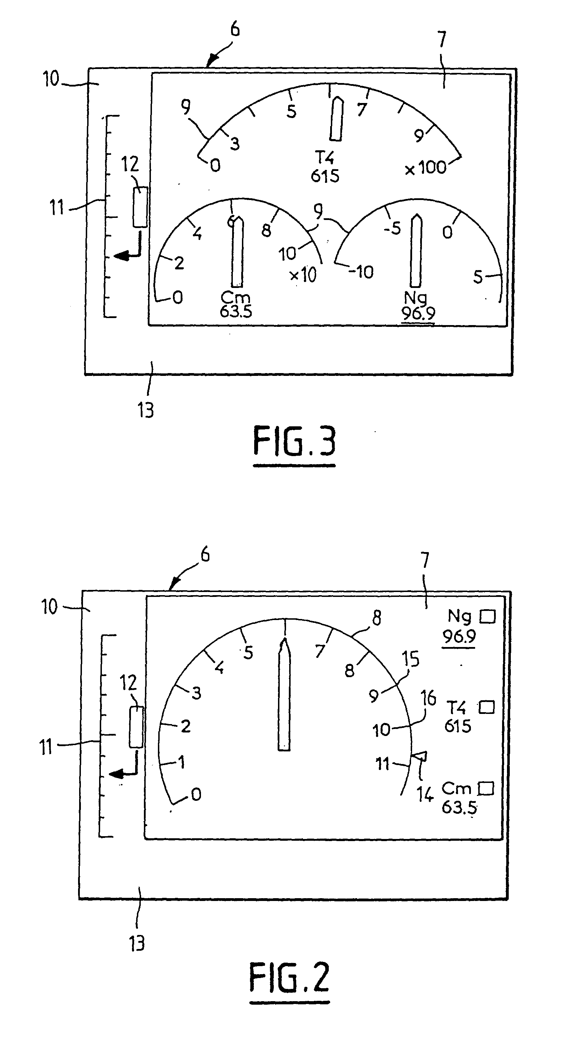

Comme on le verra en détail par la suite, l'affichage peut présenter différents modes selon les phases ou conditions de vol, ou le souhait du pilote. Dans le cas "normal", l'affichage, comme montré sur les figures 1 et 2, se fera sous la forme d'un cadran à aiguille unique 8, représentatif de la valeur actuelle du paramètre limitant.

En revanche, comme le montre la figure 3, l'écran de visualisation 7 peut présenter les trois cadrans 9 relatifs aux trois paramètres respectifs Ng, T4 et Cm, la valeur numérique du paramètre limitant étant, par exemple, soulignée comme montré sur la figure. Il est clair que toutes les valeurs numériques indiquées sur les figures 2 et 3 le sont uniquement à titre d'exemple illustratif.

Sur l'écran de visualisation 7, outre les cadrans 8, 9 décrits précédemment, on peut afficher différentes informations dont, dans le champ 10 situé à gauche du ou des cadrans 8, 9, la jauge de carburant 11, y compris un indicateur de réserve auxiliaire 12. Par ailleurs, sur le bandeau inférieur 13 de l'écran de visualisation, on peut afficher des informations telles que la masse de carburant disponible, une panne d'un calculateur dans le cas d'un système double à deux calculateurs, un dépassement de limite d'un paramètre, la température de l'air extérieur.

De plus, si cela est le cas, on peut indiquer un prélèvement d'air sous pression et à haute température au niveau de l'étage 2 du turbomoteur, noté P2 (valeur équivalente du diamètre de l'orifice de prélèvement), dans un but de climatisation de la cabine par exemple.

Concernant le paramètre Ng, c'est-à-dire le régime (ou nombre de tours) du générateur de gaz, on tient plutôt compte, en réalité, de la valeur $\Delta$ Ng,

$$\Delta \text{ Ng = Ng limite PMD à T0, P0 actuelles - Ng mesuré}$$

où T0 et P0 sont les température et pression ambiantes, respectivement.

Dans le cas d'un prélèvement de P2, et si on en tient compte, l'indication de Ng devient alors la valeur précédente moins l'effet correspondant (par exemple si, sans prélèvement de P2, $\Delta$Ng = -4,1% et si le prélèvement de P2 est égal à 1%, alors $\Delta$Ng = 3,1%, la valeur indiquée sur la figure 3).

Sur la figure 2, le réglage de l'indicateur 1 permet de définir différentes zones :

- zone de 0 à 9 : indications en vert
- zone de 9 à 10 : indications en jaune
- triangle rouge 14 à la PMT,

et

PMC en 15 = 90% de PMD en 16
PMT = 107% de PMD.

Bien entendu, ces réglages sont donnés à titre d'exemple. Ils varient selon le type d'appareil concerné.

Pour ce même exemple, on peut construire, relativement à l'affichage des valeurs Cm, Ng, T4, le tableau suivant :

|     | 0     | PMC 90% | PMD 100% | PMT 107% |
|-----|-------|---------|----------|----------|
| Cm  | $a_o$ | $a_1$   | $a_2$    | $a_3$    |
| Ng  | $b_o$ | $b_1$   | $b_2$    | $b_3$    |
| T4  | $c_o$ | $c_1$   | $c_2$    | $c_3$    |

soit, si Cm = $a_{ij}$ $\qquad$ $a_i < a_{ij} < a_{i+1}$ ;

$$Cm = 90\% + 10\% \times \frac{a_{ij} - a_i}{a_{i+1} - a_i}$$

et de même pour Ng et T4.

C'est la variable dont la valeur en pourcentage est la plus élevée parmi Cm, T4 et Ng qui sera affichée sur l'indicateur de l'invention (affichage à un cadran), avec une valeur de référence ("0") correspondant, selon le cas, à $a_o$, $b_o$ ou $c_o$, et la valeur correspondante du paramètre affiché valant respectivement 9,10 ou 10,7 (sur l'écran dans cet exemple) aux régimes PMC, PMD et PMT, respectivement.

La fonction de présentation des informations de contrôle de la puissance de l'ensemble moteur de l'aéronef a ainsi pour but d'afficher les paramètres de température d'éjection des gaz à l'entrée de turbine libre (T4), de régime du générateur de gaz (Ng) et de couple moteur (Cm) :

- soit sous forme de trois informations distinctes $\triangle$ Ng (et Ng), T4, Cm (les informations $\Delta$Ng et Ng sont fonctions de T0, P0 et de l'état de l'aéronef, $\Delta$ Ng ne prenant pas en compte le bridage dû au prélèvement de P2),
- soit sous forme d'une information unique qui synthétise ces trois informations en présentant le paramètre limitant, avantageusement en pourcentage de ses limitations de croisière, de décollage et de régime transitoire (les limitations de Ng dépendent alors de T0, P0 et du prélèvement de P2).

Plus précisément, la présentation est faite sous forme de trois informations séparées (trois cadrans), mais sur un même écran :

- avant le démarrage du moteur et lors du démarrage du moteur avec, pour l'information T4, des limitations spécifiques à la phase de démarrage du moteur (en cas d'invalidité sur les paramètres T0 et P0, $\triangle$ Ng ne sera pas affiché),

- lorsque le moteur est en fonctionnement, en cas d'invalidité sur un paramètre (Ng, T4, Cm, T0, P0) ou de la détection d'une incohérence entre les paramètres Ng, T4 et Cm (si l'anomalie concerne T0 ou P0, △ Ng ne sera pas affiché ; l'information T4 présentera des limitations de type "vol"),
- sur demande du pilote (dans ce cas, l'information T4 présentera des limitations de type "vol").

En termes de visualisation, cela conduit à cinq présentations distinctes :

(a) présentation en mode à trois informations pour les phases démarrage/arrêt,
(b) présentation en mode à trois informations pour les phases démarrage/arrêt avec panne,
(c) présentation en mode à trois informations pour les phases de vol avec panne,
(d) présentation en mode à trois informations pour les phases de vol sur demande du pilote,
(e) présentation en mode à une information pour les phases de vol "normales".

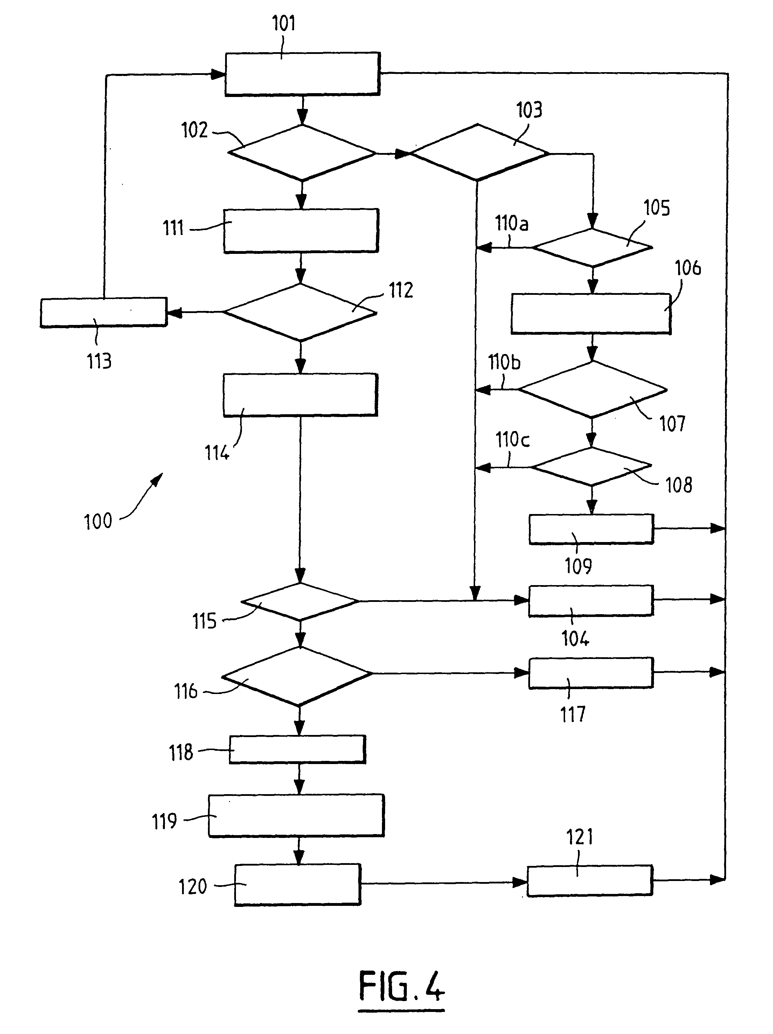

L'organisation générale de la fonction de présentation des informations de contrôle de la puissance du moteur est décrite en regard de l'organigramme 100 représenté sur la figure 4.

Si, à partir du calcul du domaine de validité des paramètres 101, la validité du domaine 102 est "invalide", alors, si la validité de Ng 103 est "invalide", alors on appelle le module 104 d'affichage à trois informations avec limitations de T4 de type "vol" et message de panne.

Sinon, si la sortie de réinitialisation 105 est "oui", on appelle le module 106 de détection de la phase de fonctionnement, si la phase de vol 107 est la phase de "démarrage/ arrêt", alors, si la sortie de réinitialisation 108 est "oui", on appelle le module 109 d'affichage à trois informations avec limitations de T4 au démarrage et message de panne.

Sinon, on appelle le module 104 d'affichage à trois informations avec limitations de T4 de type "vol" et message de panne (liaisons 110a, 110b, 110c).

Si la validité du domaine 102 est "valide", on appelle le module 111 de détection de la phase de fonctionnement. Si la phase de vol 112 est la phase de "démarrage/arrêt", alors on appelle le module 113 d'affichage à trois informations avec limitations de T4 au démarrage, sinon on appelle le module 114 de calcul des pertes d'avionnage (prélèvement de P2). Si la sortie de réinitialisation 115 est "oui" et si la sortie du module 116 correspondant à la demande du pilote pour un affichage à trois informations est "oui", alors on appelle le module 117 d'affichage à trois informations "normal" (si la sortie de réinitialisation 115 est "non", on appelle le module d'affichage 104).

Si la sortie du module 116 est "non", on appelle le module 118 de calcul des limitations des paramètres, puis le module 119 de transformation en pourcentage et de calcul de la première limitation (indice IPL), ensuite le module 120 de détermination du paramètre limitant, et enfin le module 121 d'affichage à une information (paramètre limitant).

En détail, le module 101 relatif au domaine de validité permet de réaliser les tests de pannes franches des capteurs et de vérifier une cohérence simple des différents paramètres.

Les variables utilisées sont les suivantes :

- entrées :

    . Ng vitesse de rotation ou régime du générateur de gaz en % (soit Ng exprimé en tours par minute/Ng 100%)
    . T4 température d'éjection des gaz à l'entrée de turbine libre en °K (soit température des gaz en °C + 273)
    . Cm couple moteur en % (soit couple exprimé en mda N/couple 100%)
    . P0 altitude (pression en millibars)
    . T0 température extérieure de l'air en °K (soit température extérieure de l'air en °C + 273).

- sorties :

    . validité de P0, soit variable booléenne de validité de P0 ("valide", "invalide")
    . validité de T0, soit variable booléenne de validité de T0 ("valide", "invalide")
    . validité de Ng, soit variable booléenne de validité de Ng ("valide", "invalide")
    . validité de T4, soit variable booléenne de validité de T4 ("valide", "invalide")
    . validité de Cm, soit variable booléenne de validité de Cm ("valide", "invalide")
    . validité du domaine, soit variable booléenne de validité du domaine ("valide", "invalide").

L'algorithme correspondant s'exprime alors de la façon suivante :

- test sur P0, soit l'expression de P0 inclus dans le domaine de vol, par exemple

$$-500 \text{ m} \leq \text{altitude} \leq 6000\text{m} + 500\text{m (marge)}$$

si $P0.k0 \leq P0 \leq P0.k1$
où $P0.k0$ et $P0.k1$ représentent des constantes d'altitude spécifiques pour un exemple d'aéronef donné,
alors validité de P0 = "valide"
sinon validité de P0 = "invalide"

- test sur T0, soit l'expression de T0 inclus dans le domaine de vol, par exemple

$$-50°\text{C} \leq T0 \leq \text{ISA} + 40, \text{ limité à} + 50 + 15°\text{C (marge)}$$

où ISA représente l'atmosphère standard internationale ("International Standard Atmosphere").

si $T0.k0 \leq T0 \leq T0.k1$
et $T0 \leq T0.k2 + T0.k3 \times P0^{(1/5,255)}$
où $T0.k0$, $T0.k1$ et $T0.k2$ représentent des constantes de température spécifiques pour un exemple d'aéronef donné, et $P0^{(1/5,255)}$ représente une pression spécifique (altitude), liée aux lois de l'atmosphère standard
alors validité de T0 = "valide"
sinon validité de T0 = "invalide"

- test sur Ng

si $Ng < Ng.k0$
ou $Ng > Ng.k1$
ou $\{Ng < Ng.k2$ et $[Cm > Cm.k0$ et $T4 > T4.k0]$ pendant $t1$ s$\}$
ou $\{Ng > Ng.k3$ et $[Cm < Cm.k1$ et $T4 < T4.k1]$ pendant $t2$ s$\}$
où toutes les notations munies de l'indice $k_i$ représentent des constantes spécifiques pour un exemple d'aéronef donné, comme cela sera également le cas dans toute la suite de cet exposé (de même que ti),
alors validité de Ng = "invalide"
sinon validité de Ng = "valide"

- test sur T4

si $T4 < T4.k2$
ou $T4 > T4.k3$
ou $\{T4 < T4.k4$ et $[Cm > Cm.k2$ et $Ng > Ng.k4]$ pendant $t3$ s$\}$
ou $\{T4 > T4.k5$ et $[Cm < Cm.k3$ et $Ng < Ng.k5]$ pendant $t4$ s$\}$
alors validité de T4 = "invalide"
sinon validité de T4 = "valide"

- test sur Cm

si $Cm < Cm.k4$
ou $Cm > Cm.k5$
ou $\{Cm < Cm.k6$ et $[T4 > T4.k6$ et $Ng > Ng.k6]$ pendant $t5$ s$\}$
ou $\{Cm > Cm.k7$ et $[T4 < T4.k7$ et $Ng < Ng.k7]$ pendant $t6$ s$\}$
alors validité de Cm = "invalide"
sinon validité de Cm = "valide"

- test de validité du domaine

si validité de P0 = "valide"
et validité de T0 = "valide"
et validité de Ng = "valide"
et validité de T4 = "valide"
et validité de Cm = "valide"

alors validité du domaine = "valide"
sinon validité du domaine = "invalide".

Le module 106 de détection de la phase de fonctionnement a pour but de déterminer la configuration de l'aéronef afin de sélectionner le mode d'affichage approprié des informations (mode à un affichage ou mode à trois affichages).

Deux algorithmes peuvent être envisagés :

- affichage en mode à un affichage dans les cas : moteur en fonctionnement et arrêt du moteur, et affichage en mode à trois affichages dans les cas : moteur arrêté et démarrage du moteur,
- affichage en mode à un affichage dans le cas : moteur en fonctionnement, et affichage en mode à trois affichages dans les autres cas : moteur arrêté, démarrage du moteur, et arrêt du moteur.

Les variables utilisées sont les suivantes :

- entrée :

    . Ng

- sorties :

    . phases de vol        "démarrage/arrêt" ou "vol"
    . état du moteur        "moteur arrêté" ou "moteur en fonctionnement".

Le premier algorithme s'exprime alors de la façon suivante :

.  si Ng < Ng.k15

       alors phase de vol = "vol" et
       état du moteur = "moteur arrêté"
       sinon état du moteur = "moteur en fonctionnement"

          si Ng < Ng.k8 pendant t7 s
          ou [Ng < Ng.k9 et phase précédente = "démarrage/arrêt"]
          alors phase de vol = "démarrage/arrêt"
          sinon

             si Ng $\geq$ Ng.k9 pendant t8 s
             ou [Ng $\leq$ Ng.k9 et phase précédente = "vol"]
             alors phase de vol = "vol"
             sinon phase de vol = phase précédente.

Le second algorithme est identique au premier avec la condition suivante : Ng.k8 = Ng.k9.

La figure 5 illustre les conditions du premier algorithme (Ng en fonction du temps t̲) :

       a) la phase de vol est "démarrage/arrêt", soit Ng < Ng.k8,
       b) la phase de vol est "démarrage/arrêt", soit Ng < Ng.k9 et la phase précédente est "démarrage/arrêt",
       c) la phase de vol est "vol", soit Ng $\geq$ Ng.k9,
       d) la phase de vol est "vol", soit Ng < Ng.k9 et la phase précédente est "vol", et
       e) identique à a).

Dans le module 114 relatif au calcul des pertes d'avionnage et du prélèvement de P2, on tient compte des différentes sources de perte de puissance, telles que notamment un prélèvement d'air chaud pour la climatisation de la cabine. Les calculs effectués dans ce module dépendent fortement des conditions spécifiques rencontrées de sorte que nous n'entrerons pas ici dans leur détail.

Le module 118 de calcul des limitations pour la présentation en mode à un affichage permet de :

- définir les limitations en T4 et Cm (constantes),

- calculer les limitations de Ng (fonction de P0, T0 ; état des options chauffage et/ou filtre anti-sable).

Les limitations en Cm et T4 ne dépendent pas des conditions P0, T0, tandis que les limitations courantes de Ng sont fonction des conditions P0, T0 et du prélèvement éventuel de P2, soit un calcul en deux étapes. Le calcul du bridage de Ng en fonction du prélèvement de P2 peut être défini suivant une méthode complexe non décrite ici.

Les variables utilisées sont :

- entrées :

  . P0 altitude (pression en millibars)
  . T0 température extérieure de l'air en °K
  . Prélèvement de P2 : valeur équivalente du diamètre de l'orifice de prélèvement de P2

- sorties :

  . T4 (pmc) limitation courante de T4 à la PMC
  . T4 (pmd) limitation courante de T4 à la PMD
  . T4 (pmt) limitation courante de T4 à la PMT
  . Cm (pmc) limitation courante de Cm à la PMC
  . Cm (pmd) limitation courante de Cm à la PMD
  . Cm (pmt) limitation courante de Cm à la PMT
  . Ng (pmc) limitation courante de Ng à la PMC
  . Ng (pmd) limitation courante de Ng à la PMD
  . Ng (pmt) limitation courante de Ng à la PMT

Le calcul des limitations de chaque paramètre T4, Cm, Ng constitue un module séparé. Ces modules sont décrits dans les paragraphes suivants.

On a donc :

- module des limitations de T4 normales (et éventuellement module de T4 au démarrage)
- module des limitations de Cm normales
- module des limitations de Ng normales
- module des limitations de Ng courantes.

Soit, plus précisément :

- dans le module des limitations de T4 normales :

  . T4 (pmc) = T4 (pmc) normale
  . T4 (pmd) = T4 (pmd) normale
  . T4 (pmt) = T4 (pmt) normale

- dans le module des limitations de Cm normales :

  . Cm (pmc) = Cm (pmc) normal
  . Cm (pmd) = Cm (pmd) normal
  . Cm (pmt) = Cm (pmt) normal

- dans le module des limitations de Ng normales :

  . calcul de Ng(pmt).k(P0,T0) = Ng.k10
  . calcul de Ng*(T0) en %, où Ng*(T0) représente les limitations du paramètre Ng en fonction de T0.
  . calcul de l'expression de Ng en limite de débit
  . calcul de Ng(pmd).k(P0,T0)
  . calcul de Ng(pmc).k(P0,T0)

- dans le module des limitations de Ng courantes :

- calcul du détarage (pmt).k(P0,T0,P2)
- calcul du détarage (pmd).k(P0,T0,P2)
- calcul du détarage (pmc).k(P0,T0,P2),

sachant que le terme "détarage" exprime la diminution de puissance théorique dans les conditions de fonctionnement (vol) instantanées,

- calcul des limitations courantes de Ng

  - Ng(pmt) = Ng(pmt).k(P0,T0) - détarage(pmt).k(P0,T0,P2)
  - Ng(pmd) = Ng(pmd).k(P0,T0) - détarage(pmd).k(P0,T0,P2)
  - Ng(pmc) = Ng(pmc).k(P0,T0) - détarage(pmc).k(P0,T0,P2)

- calcul de $\Delta$ Ng

  si Ng > Ng(pmd).k(P0,T0)
  alors $\Delta$Ng = (Ng-Ng(pmd).k(P0,T0)) / (Ng(pmt).k(P0,T0) -Ng(pmd).k(P0,T0)$\triangle$Ng.k3
  sinon $\Delta$Ng = Ng-Ng(pmd).k(P0,T0).

Le module 119 de transformation des paramètres en pourcentage de l'indice IPL a pour but de transformer les unités des paramètres T4, Ng et Cm en pourcentage de l'indice IPL et de calculer la première limitation.
Les variables utilisées sont, entre autres, les suivantes :

- entrées :

  - Ng (pmc) limite Ng à la PMC
  - Ng (pmd) limite Ng à la PMD
  - Ng (pmt) limite Ng à la PMT
  - T4 (pmc) limite T4 à la PMC
  - T4 (pmd) limite T4 à la PMD
  - T4 (pmt) limite T4 à la PMT
  - Cm (pmc) limite Cm à la PMC
  - Cm (pmd) limite Cm à la PMD
  - Cm (pmt) limite Cm à la PMT

- sorties :

  - T4% température des gaz en % d'IPL
  - Cm% couple moteur en % d'IPL
  - Ng% régime du générateur de gaz en % d'IPL
  - IPL% première limitation

L'algorithme correspondant s'exprime alors de la façon suivante :

- initialisations :

  - Ng% = 0
  - Cm% = 0
  - T4% = 0

- traduction de T4 en T4%

  - calcul de T4 de puissance nulle ($T4_0{}^*$)

    $\gamma 1 = (P0/P00)^{n1}$
    $\Phi1 = (T0/T015)^{p1}$
    $T4_0{}^* = T4.k8 \times (\gamma1 \times \Phi1)$

. si T4 > T4 (pmd)

    alors T4% = 100% + CTPCMPT.T4 x (T4-T4(pmd)) / (T4(pmt) - T4(pmd))
    sinon
    si T 4 > T4 (pmc)
    alors T4% = 90% + 10% x (T4-T4(pmc)) / (T4(pmd)-T4(pmc))
    sinon T4% = 90% x (T4-$T4_0$*) / (T4(pmc)-$T4_0$*)

- traduction de Ng en Ng%

. calcul de Ng de puissance nulle

$$\gamma 3 = (T0/T015)^{n3}$$

$$Ng_0* = Ng.k14 \times \gamma 3$$

. si Ng > Ng (pmd)

    alors Ng% = 100% + CTPCMT.Ng x (Ng-Ng(pmd)) / (Ng(pmt) - Ng(pmd))
    sinon
    si Ng > Ng (pmc)
    alors Ng% = 90% + 10% x (Ng - Ng(pmc)) / (Ng(pmd) - Ng(pmc))
    sinon Ng% = 90% x (Ng-$Ng_0$*) / (Ng(pmc) - $Ng_0$*)

- traduction de Cm en Cm%

    si Cm > Cm (pmd)
    alors Cm% = 100% + CTPCMT.Cm x (Cm - Cm(pmd)) / (Cm(pmt) - Cm(pmd))
    sinon
    si Cm > Cm (pmc)
    alors Cm% = 90% + 10% x (Cm - Cm(pmc)) / (Cm(pmd)-Cm(pmc))
    sinon Cm% = 90% x Cm / Cm (pmc)
    (CTPCMT représentant une indication de différence en % d'indicateur IPL entre les bornes PMD et PMT)

- détermination de la valeur d'indice IPL
    IPL% = maximum (Ng%, T4%, Cm%)

Le module 120 de détermination de paramètre limitant détermine le paramètre limitant (Ng, T4 ou Cm). On notera que, afin d'éviter le clignotement de cet affichage, on effectue le basculement d'un paramètre limitant à un autre en ne validant un changement d'état qu'après <u>n</u> informations consécutives identiques.
Les variables utilisées sont les suivantes :

- entrées :

. Ng% régime du générateur de gaz en % de l'indice IPL
. T4% témpérature des gaz en % de l'indice IPL
. Cm% couple moteur en % de l'indice IPL

- sorties :

    Paramètre limitant : variable à trois états ("Ng", "T4", "Cm").

L'algorithme correspondant s'exprime alors de la façon suivante :

- initialisation : paramètre limitant = "Ng" (évolutif)
- détermination du paramètre limitant :

. si paramètre limitant = "T4"

si Cm% > T4% + EPPC.T4 et

$$Cm\% \geq Ng\%$$

alors paramètre limitant = "Cm"
si Ng% > T4% + EPPC.T4 et

$$Ng\% > Cm\%$$

alors paramètre limitant = "Ng"

. sinon si paramètre limitant = "Ng"

si Cm% > Ng% + EPPC.Ng et

$$Cm\% \geq T4\%$$

alors paramètre limitant = "Cm"
si T4% > Ng% + EPPC.Ng et

$$T4\% > Cm\%$$

alors paramètre limitant = "T4"

. sinon si paramètre limitant = "Cm"

si T4% > Cm% + EPPC.Cm et T4% $\geq$ Ng%
alors paramètre limitant = "T4"
si Ng% > Cm% + EPPC.Cm et Ng% > T4%
alors paramètre limitant = "Ng",
avec EPPC.(T4, Ng, Cm) exprimé en pourcentage (par exemple égal à 1) relatif au seuil de changement
du paramètre limitant.

L'indicateur selon l'invention permet ainsi de visualiser sur un écran unique les informations fournies par différents capteurs. Cet indicateur présente donc à tout instant sur un cadran gradué (ou plusieurs) les informations suivantes :

- la situation actuelle du moteur, la position de l'aiguille étant représentative de la puissance fournie par le moteur à chaque instant ;
- les limitations de la machine : des zones de couleur, des traits, des triangles et autres étant représentatifs des divers niveaux des limitations.

En particulier, l'écart entre l'aiguille (affichage à un seul cadran) et une limitation fournit une "représentation" de la marge de puissance dont dispose le pilote dans le cas de vol actuel.
On notera de plus que l'information fournie par l'indicateur de l'invention, outre l'affichage direct sur un écran de visualisation, peut aussi servir d'information de base pour l'élaboration d'une loi d'effort, permettant de prévenir le pilote qu'il s'approche d'une limitation par des moyens physiques : durcissement d'un ressort ou vérin, vibrations par exemple.

**Revendications**

1. Indicateur de pilotage pour aéronef, destiné à fournir la marge de puissance disponible sur au moins un moteur de l'aéronef en fonction des conditions de vol, comprenant :

- des capteurs (2, 3, 4) aptes à délivrer des informations relatives à différents paramètres de surveillance du moteur,
- des moyens de traitement (5) des informations issues desdits capteurs (2, 3, 4), et
- des moyens d'affichage (6) présentant, sur un écran de visualisation (7), les informations traitées relatives au paramètre, parmi lesdits paramètres de surveillance du moteur, dont la valeur actuelle est la plus proche de la valeur limite pour ledit paramètre,

**caractérisé en ce que** lesdites valeurs limites pour chaque paramètre sont établies en tenant compte, en temps réel, de la pression (P0) et de la température (T0) ambiantes.

**2.** Indicateur de pilotage selon la revendication 1, destiné à un aéronef à voilure tournante, notamment un hélicoptère, comportant au moins un turbomoteur d'entraînement d'au moins un rotor,
**caractérisé en ce que** lesdits paramètres de surveillance du moteur sont :

- le régime du générateur de gaz (Ng),
- la température d'éjection des gaz à l'entrée de turbine libre (T4), et
- le couple moteur (Cm).

**3.** Indicateur de pilotage selon la revendication 2,
**caractérisé en ce que**, dans lesdits moyens de traitement (5), les valeurs du régime du générateur de gaz (Ng) et de la température des gaz (T4) sont ramenées à une échelle comparable au couple moteur, après avoir été comparées à leurs limites respectives.

**4.** Indicateur de pilotage selon la revendication 3,
**caractérisé en ce que** lesdites limites sont établies en tenant compte de tout prélèvement de puissance au niveau du moteur de l'aéronef.

**5.** Indicateur selon l'une quelconque des revendications 3 ou 4,
**caractérisé en ce que** lesdites valeurs du régime du générateur de gaz (Ng), de la température des gaz (T4) et du couple moteur (Cm) peuvent être exprimées en pourcentage de leurs limites respectives.

**6.** Indicateur selon l'une quelconque des revendications 1 à 5,
**caractérisé en ce que**, sur ledit écran de visualisation (7), un seul cadran (8) est affiché montrant le paramètre dont la valeur actuelle est la plus proche de la valeur limite pour ledit paramètre.

**7.** Indicateur selon l'une quelconque des revendications 1 à 5,
**caractérisé en ce que**, sur ledit écran de visualisation (7), sont affichés autant de cadrans (9) que de paramètres de surveillance du moteur, le paramètre dont la valeur actuelle est la plus proche de la valeur limite étant mis en évidence.

**Patentansprüche**

**1.** Anzeigesystem für Flugzeuge, das dafür vorgesehen ist, den an wenigstens einem Motor des Flugzeugs verfügbaren Leistungsbereich in Abhängigkeit von den Flugbedingungen bereitzustellen, welches umfasst:

- Sensoren (2, 3, 4), die fähig sind, Informationen bezüglich verschiedener Überwachungsparameter des Motors zu liefern,
- Mittel (5) zur Verarbeitung der von den Sensoren (2, 3, 4) stammenden Informationen und
- Anzeigemittel (6), die auf einem Bildschirm (7) die verarbeiteten Informationen bezüglich des Parameters anzeigen, dessen aktueller Wert unter den Überwachungsparametern des Motors am nächsten beim Grenzwert für den Parameter liegt,

**dadurch gekennzeichnet, dass** die Grenzwerte für jeden Parameter in Echtzeit unter Berücksichtigung des Umgebungsdrucks (P0) und der Umgebungstemperatur (T0) erstellt sind.

**2.** Anzeigesystem nach Anspruch 1, das für ein Flugzeug mit Rotor, insbesondere einen Hubschrauber, vorgesehen ist, der wenigstens einen Turbomotor für den Antrieb wenigstens eines Rotors aufweist,

**dadurch gekennzeichnet, dass** die Überwachungsparameter des Motors sind:

- die Drehzahl des Gasgenerators (Ng),
- die Ausstoßtemperatur der Gase am Eingang der freien Turbine (T4) und
- das Motormoment (Cm).

3. Anzeigesystem nach Anspruch 2,
**dadurch gekennzeichnet, dass** in den Verarbeitungsmitteln (5) die Werte der Drehzahl des Gasgenerators (Ng) und der Temperatur der Gase (T4) auf einen Maßstab gebracht sind, der mit dem Motormoment vergleichbar ist, nachdem sie mit ihren jeweiligen Grenzwerten verglichen werden.

4. Anzeigesystem nach Anspruch 3,
**dadurch gekennzeichnet, dass** die Grenzwerte unter Berücksichtigung jeder Leistungsentnahme am Motor des Flugzeugs erstellt sind.

5. Anzeigesystem nach einem der Ansprüche 3 oder 4,
**dadurch gekennzeichnet, dass** die Werte der Drehzahl des Gasgenerators (Ng), der Temperatur der Gase (T4) und des Motormoments (Cm) in Prozentsätzen ihrer jeweiligen Grenzwerte ausgedrückt sind.

6. Anzeigesystem nach einem der Ansprüche 1 bis 5,
**dadurch gekennzeichnet, dass** auf dem Bildschirm (7) eine einzige Skala (8) angezeigt ist, die den Parameter zeigt, dessen aktueller Wert am nächsten bei dem Grenzwert für diesen Parameter liegt.

7. Anzeigesystem nach einem der Ansprüche 1 bis 5,
**dadurch gekennzeichnet, dass** auf dem Bildschirm (7) so viele Skalen (9) wie Überwachungsparameter des Motors angezeigt sind, wobei der Parameter hervorgehoben ist, dessen aktueller Wert am nächsten bei dem Grenzwert für diesen Parameter liegt.

**Claims**

1. Flight indicator for an aircraft, intended to give the power margin available on at least one engine of the aircraft as a function of the flight conditions, comprising:

- sensors (2, 3, 4) capable of delivering data relating to various monitored parameters of the engine,
- means (5) of processing the data coming from the said sensors (2, 3, 4), and
- display means (6) showing, on a display screen (7), the processed data relating to that parameter among the said monitored engine parameters, whose current value is closest to the limiting value for the said parameter,

**characterized in that** the said limiting values for each parameter are established taking the ambient pressure (P0) and ambient temperature (T0) into account, in real time.

2. Flight indicator according to Claim 1, intended for a rotary-wing aircraft, especially a helicopter, including at least one turbine engine for driving at least one rotor,
**characterized in that** the said monitored engine parameters are:

- the speed (Ng) of the gas generator,
- the temperature (T4) at which the gases are ejected at the inlet to the free turbine, and
- the engine torque (Cm).

3. Flight indicator according to Claim 2,
**characterized in that**, in the said processing means (5), the values of the gas generator speed (Ng) and of the gas temperature (T4) are converted to a scale which is comparable with the engine torque, after they have been compared with their respective limits.

4. Flight indicator according to Claim 3,
**characterized in that** the said limits are established taking account of any power drawn off from the aircraft engine.

13

5. Indicator according to either of Claims 3 and 4, **characterized in that** the said values of the gas generator speed (Ng), of the gas temperature (T4) and of the engine torque (Cm) can be expressed as percentages of their respective limits.

6. Indicator according to any one of Claims 1 to 5, **characterized in that** displayed on the said display screen (7) is just one dial (8) showing the parameter whose current value is closest to the limiting value for the said parameter.

7. Indicator according to any one of Claims 1 to 5, **characterized in that** displayed on the said display screen (7) are as many dials (9) as there are monitored engine parameters, the parameter whose current value is closest to the limiting value being emphasized.

# FIG.1

# FIG.5

FIG.3

FIG.2

FIG.4